# EUROPÄISCHE PATENTSCHRIFT

(11) **EP 3 891 035 B1**
(45) Veröffentlichungstag und Bekanntmachung des Hinweises auf die Patenterteilung: **06.03.2024**
(21) Anmeldenummer: 19817992.1
(22) Anmeldetag: 04.12.2019
(51) Int. Cl.: B60W 50/00, B60W 50/02, B60W 50/08, B60W 50/10, B60W 50/14

(54) **FAHRERASSISTENZSYSTEM UND VERFAHREN ZUM ASSISTIERTEN BETREIBEN EINES KRAFTFAHRZEUGS**
DRIVER ASSISTANCE SYSTEM AND METHOD FOR AN ASSISTED OPERATION OF A MOTOR VEHICLE
SYSTÈME D'AIDE À LA CONDUITE ET PROCÉDÉ DE FONCTIONNEMENT ASSISTÉ D'UN VÉHICULE AUTOMOBILE

(30) Priorität: 07.12.2018 DE 102018131470
(43) Veröffentlichungstag der Anmeldung: 13.10.2021
(73) Patentinhaber: ZF Active Safety GmbH, 56070 Koblenz (DE)
(72) Erfinder: SCHNEIDER, Georg, 56182 Urbar (DE); MUELLER, Thomas, 81241 München (DE)
(74) Vertreter: Gerschütz, Florian Matthias
(86) Internationale Anmeldenummer: PCT/EP2019/083697
(87) Internationale Veröffentlichungsnummer: WO 2020/115145

(56) Entgegenhaltungen:
- EP-A1- 3 395 634
- WO-A1-2017/174361
- DE-A1-102016 219 594
- DE-A1-102017 005 319
- US-A1- 2018 188 031

## Beschreibung

Die Erfindung betrifft ein Fahrerassistenzsystem für ein mit dem Fahrerassistenzsystem ausgestattetes Kraftfahrzeug (eigenes Fahrzeug) sowie ein Verfahren zum assistierten Betreiben eines Kraftfahrzeugs. Vorzugsweise ist das Kraftfahrzeug ein Radkraftfahrzeug, wie ein Personenkraftwagen oder ein Lastkraftwagen.

Bekannte Fahrerassistenzsysteme erfassen mittels einer Umfeldsensorik deren Umfeld, um den Fahrer eine Fahrzeugs bei dessen Fahrzeugkontrollaufgaben zu unterstützten oder diese zumindest teilweise zu übernehmen. Ein bekanntes Fahrerassistenzsystem ist ein Notbremsassistent, welcher einen Zusammenstoß eines eigenen, mit dem Notbremsassistenten ausgestatteten Fahrzeugs mit anderen Verkehrsteilnehmern verhindert oder abmildert. Dazu detektiert der Notbremsassistent auf Basis von beispielsweise mit einer Kamera und oder einem Radar erfassten Umfelddaten ein Objekt im Umfeld des Fahrzeugs, dessen Bewegungsrichtung und -geschwindigkeit. Der Notbremsassistent ermittelt eine Kollisionswahrscheinlichkeit sowie eine Zeit bis zu einer möglichen Kollision mit dem Objekt. Unterschreitet die Zeit bis zu möglichen Kollision einen Schwelle, unterhalb der die Zeit für einen kollisionsvermeidenden Bremsvorgang aus der momentanen Geschwindigkeit nicht mehr ausreicht, leitet der Notbremsassistent eine assistierte oder automatische Bremsung ein. Die Zeit, die ein Bremsvorgang zur Vermeidung einer Kollision erfordert, wird beispielsweise aus der momentanen Fahrzeuggeschwindigkeit und einer maximal möglichen Verzögerung des Fahrzeugs berechnet. Die maximal mögliche Verzögerung oder die Schwelle, ab welcher der Notbremsvorgang eingeleitet wird, sind Parameter die dem Assistenzsystem dauerhaft eingeprägt sein können und während der Entwicklung des Fahrerassistenzsystems auf Basis empirischer Daten und/oder physikalischer Modelle für eine gewünschte Systemleistung unter bestimmten Bedingungen abgestimmt werden.

Bei den meisten bekannten Fahrerassistenzsystemen hängt Funktion und Leistung von einem oder mehreren Assistenzsystemparametern ab, die während der Entwicklung des Fahrerassistenzsystems auf Basis einer begrenzten Menge empirischer Daten, physikalischen Modellen und/oder für bestimmte Funktionsszenarien abgestimmt werden. Weil gleichwohl die für die Entwicklung herangezogenen Daten und die betrachteten Funktionsszenarien kein vollständiges Bild des realen Verkehrsgeschehens geben können und ein Modell stets nur eine mehr oder weniger gute Annäherung an die physikalische Realität darstellt, bleibt der eine oder bleiben die mehreren Assistenzsystemparameter zumindest in Bezug auf einzelne Fahr- oder Umfeldsituationen suboptimal. Abhängig vom jeweiligen Fahrerassistenzsystem führt dies zu Schwächen in der Unterstützung des Fahrers, die sich häufig an bestimmten Orten und/oder Zeitpunkten reproduzieren lassen, wenn diese zumindest teilweise auf eine systematische Ursache zurückgehen.

Es ist Aufgabe der Erfindung, die Nachteile des Stands der Technik zu überwinden, insbesondere ein Fahrerassistenzsystem bereitzustellen, das in möglichst vielen Verkehrssituationen zuverlässig und fehlerfrei arbeitet.

Ein repräsentatives Fahrerassistenzsystem für ein Kraftfahrzeug ist aus EP3395634 bekannt.,

Diese Aufgabe wird durch ein Fahrerassistenzsystem nach Anspruch 1 gelöst. Danach umfasst ein Fahrerassistenzsystem für ein Kraftfahrzeug eine Umfeldsensorik, ein Steuergerät sowie ein Bewertungsmodul, wobei das Steuergerät dazu eingerichtet und bestimmt ist, basierend auf von der Umfeldsensorik erfassten Umfelddaten ein Assistenzfunktionssteuersignal zu ermitteln, das in einem vorbestimmten Funktionszusammenhang mit wenigstens einem Assistenzsystemparameter und den erfassten Umfelddaten steht, und das Fahrzeug mit dem Assistenzfunktionssteuersignal für eine Fahrzeugreaktion anzusteuern, wobei das Bewertungsmodul dazu eingerichtet und bestimmt ist, einen Erfolgswert für das Assistenzfunktionssteuersignal zu ermitteln und, falls der Erfolgswert einen Erfolgsschwellwert unterschreitet, eine Optimierung des Assistenzsystemparameters auszulösen.

Die Aufgabe wird auch gelöst durch ein Verfahren zum assistierten Betreiben eines Kraftfahrzeugs mit Unterstützung eines Fahrerassistenzsystems wie durch Anspruch 9 definiert.

Mit dem Assistenzfunktionssteuersignal oder mehreren, gleichzeitig oder aufeinanderfolgend ermittelten Assistenzfunktionssteuersignalen steuert das Fahrerassistenzsystem weitere Komponenten des Kraftfahrzeugs an, um die Assistenzfunktion, wie eine Verkehrszeichenerkennung oder einen automatisierte, umfeldbasierte Fahrwerksanpassung, bereitzustellen. Die weiteren Komponenten können von Fahrerassistenzsystem umfasst sein oder hinsichtlich der Systemarchitektur des Kraftfahrzeugs separate und/oder als eigenständige Module, wie ein Fahrwerksteuergerät, eine Benutzerschnittstelle oder ein Motorsteuergerät, ausgestaltet sein. Um basierend auf den Umfelddaten das Assistenzfunktionssteuersignal zu ermitteln, greift das Steuergerät auf den vorbestimmten Funktionszusammenhang zu. Der Funktionszusammenhang umfasst wenigstens eine Rechenregel, die einen deterministischen Zusammenhang zwischen den Umfelddaten und dem Assistenzfunktionssteuersignal und der zu erzielenden Assistenzfunktion herstellt. Alternativ oder zusätzlich arbeitet das Steuergerät für die Auswertung des Funktionszusammenhangs nach einem Verfahren und/oder nutzt einen Regelkreis. Der Funktionszusammenhang, insbesondere die Rechenregel, das Verfahren und/oder der Regelkreis umfasst einen Assistenzsystemparameter oder mehrere Assistenzsystemparameter. Die Assistenzsystemparameter beeinflussen das sich aus dem Funktionszusammenhang auf Basis der Umfelddaten ergebende Assistenzsteuersignal und damit die Systemleistung.

Das Bewertungsmodul kann als nach einem vorbestimmten Verfahren arbeitendes Softwaremodul ausgeführt sein, das auf dem Steuergerät des Fahrerassistenzsystems oder auf einem räumlich und/oder systemarchitektonisch getrennten, wie einem mit einer eigenen Fahrzeugnetzwerkadresse versehenen, Steuergerät, ausgeführt sein. Durch Bewertung der momentane Systemleistung des Fahrerassistenzsystems anhand des Assistenzfunktionssteuersignals wird eine Rückmeldeschleife über eine auf der Funktionsebene des Systems ermöglicht. Bei Schlechtleistung des Fahrerassistenzsystems wird die Assistenzfunktionen des Systems verbessert, indem der wenigstens eine Assistenzsystemparameter verbessert wird. Eine bessere Abstimmung oder anders geartete Optimierung eines oder mehrerer Assistenzsystemparameters führt zur Verbesserung der Systemleistung, erhöhter Verfügbarkeit oder verbesserter Zuverlässigkeit.

In einer bevorzugten Ausführung ist das Bewertungsmodul mit einem Fahrdynamiksensor und/oder einer Umfeldsensorik verbindbar und dazu eingerichtet und bestimmt, aus Fahrzeugreaktionsdaten des Fahrdynamiksensors und/oder Umfelddaten der Umfeldsensorik einen Erfolgswert zu ermitteln. Insbesondere ist das Bewertungsmodul mit mehreren Fahrdynamiksensoren, wie einem Beschleunigungs-, Raddrehzahl- und/oder Drehwinkelsensor, derart verbindbar, das es Fahrzeugreaktionsdaten von den Fahrdynamiksensoren empfängt. Das Bewertungsmodul ist insbesondere dazu eingerichtet und bestimmt, einen Erfolgswert dadurch zu ermitteln, dass gemessene Fahrzeugreaktionsdaten und/oder Umfelddaten mittels einer vordefinierten Bewertungsregel in Bezug zu einem Zielkriterium gesetzt werden. Vorzugsweise wird eine physikalische Bewertungsmessgröße aus den Fahrzeugreaktionsdaten und/oder Umfelddaten ermittelt. Beispielsweise ist die Bewertungsmessgröße eine Beschleunigung oder Verschiebung des Fahrzeugs in einer der Raumrichtungen, die insbesondere mittels Beschleunigungssensoren und/oder eine Kamera erfasst und/oder mit dem jeweils anderen von Fahrzeugreaktionsdaten und/oder Umfelddaten abgeglichen wird.

Insbesondere ermittelt das Bewertungsmodul den Erfolgswert aus Fahrzeugreaktionsdaten und/oder Umfelddaten, die zu einer Reaktionszeit erfasst werden. Insbesondere werden Umfelddaten, auf Basis derer das Assistenzfunktionssteuersignal ermittelt wurde, zu einer Erfassungszeit erfasst. Bei der Reaktionszeit und/oder Erfassungszeit kann es sich abhängig von der Fahrerassistenzfunktion auch um eine Zeitdauer handeln. Insbesondere unterscheiden sich Reaktionszeit und Erfassungszeit. Insbesondere beginnt die Reaktionszeit wenigstens eine Systemreaktionszeitdauer nach der Erfassungszeit. Vorzugsweise umfassen Fahrzeugreaktionsdaten Daten einer von den Umfelddaten unterschiedlichen physikalischen Größe, die das Bewertungsmodell für einen Abgleich über eine Rechenregel in Beziehung zu den Fahrzeugreaktionsdaten setzt und/oder sind mittels eines anderes physikalisches Prinzips erfasst.

In einer bevorzugten Ausführung weist das Fahrerassistenzsystem einen Speicher auf, wobei das Steuergerät dazu eingerichtet und bestimmt ist, Umfelddaten zu einer Erfassungszeit zu erfassen sowie Fahrzeugreaktionsdaten und/oder Umfelddaten zu einer Fahrzeugreaktionszeit zu erfassen. Zu einer Erfassungszeit erfasste Umfelddaten werden durch das Fahrerassistenzsystem ausgewertet, um aus dem Funktionszusammenhang, ein Assistenzfunktionssteuersignal zu ermitteln. Zusätzlich können, zu einer späteren Fahrzeugreaktionszeit Umfelddaten für die Bestimmung der Fahrzeugreaktion erfasst werden, z.B. um erfasste Fahrzeugreaktionsdaten zu plausibilisieren oder bei einem Sensorfehler zu ersetzen.

Das Fahrerassistenzsystem umfasst einen Absolutpositionssensor und einen Speicher, der absoluten Fahrzeugpositionen zugeordnete, insbesondere zu einer früheren jeweiligen Fahrzeugreaktionszeit erfasste, Umfelddaten und/oder Fahrzeugreaktionsdaten aufweist, wobei das Bewertungsmodul dazu eingerichtet und bestimmt ist, eine Referenzinformation aus Umfelddaten und/oder Fahrzeugreaktionsdaten des Speicher für eine mit dem Absolutpositionssensor gemessene momentane Fahrzeugposition zu bilden. Vorzugsweise ist den gespeicherten Umfelddaten und/oder Fahrzeugreaktionsdaten ein Erfolgswert zugeordnet, der zu dem früheren jeweiligen Fahrzeugreaktionszeit ermittelt wurde. Das Bewertungsmodul ermittelt einen Erfolgswert für das basierend auf den zur Erfassungszeit erfassten Umfelddaten ermittelte Assistenzsteuersignal durch Vergleich und/oder in Bezug Setzen der Referenzinformation.

Insbesondere ist den Fahrzeugreaktionsdaten auch der jeweilige Assistenzsystemparameter im Speicher zugeordnet, so dass eine Assistenzsystemparameter, der gemäß Fahrzeugreaktionen einen höheren Erfolgswert erreicht hat, für die zukünftige Ermittlung eines Assistenzfunktionssteuersignals an dieser Fahrzeugposition aus dem Speicher abgerufen werden kann. Vorzugsweise wird der im Speicher zugeordnete Assistenzsystemparameter abgerufen, sobald die Optimierung durch das Bewertungsmodul ausgelöst wird.

In einer bevorzugten Ausführung umfasst das Fahrerassistenzsystem eine Benutzerschnittstelle, wobei das Bewertungsmodul dazu eingerichtet und bestimmt ist, zur Ermittlung des Erfolgswert die Benutzerschnittstelle zur Ausgabe einer Benutzerabfrage und Empfang einer Benutzereingabe anzusteuern. Über die Benutzerschnittstelle kann ein Verwender des Fahrerassistenzsystem das durch das Assistenzsteuersignal verursachte Fahrzeugreaktion bewerten. Die Benutzereingabe bildet den Erfolgswert ausschließlich oder fließt in eine Ermittlung des Erfolgswerts durch das Bewertungsmodul ein. Vorzugsweise priorisiert das Bewertungsmodul über die Benutzerschnittstelle empfangene Benutzereingaben bei der Ermittlung des Erfolgswerts.

In einer bevorzugten Ausführung ist das Bewertungsmodul dazu eingerichtet und bestimmt, für die Ermittlung des Erfolgswerts, gemäß einer vordefinierten Abfolge, in dem Speicher vorhandene Umfelddaten und/oder Fahrzeugreaktionsdaten für eine mit dem Absolutpositionssensor gemessene momentane Fahrzeugposition mit den erfassten Umfelddaten und/oder Fahrzeugreaktionsdaten zu vergleichen, Fahrzeugreaktionsdaten und/oder Umfelddaten bezüglich wenigstens eines Zielkriteriums zu bewerten und/oder eine Benutzerschnittstelle zur Ausgabe einer Benutzerabfrage und Empfang einer Benutzereingabe anzusteuern. Insbesondere prüft das Bewertungsmodul zunächst, ob im Speicher Umfelddaten und/oder Fahrzeugreaktionsdaten für diese Position vorliegen, die als Referenzinformation dienen können.

Wenn im Speicher keine Daten für die momentane Fahrzeugposition vorliegen, werden für die Ermittlung des Erfolgswerts die gemessenen Fahrzeugreaktionsdaten und/oder Umfeld anhand eines Zielkriteriums bewertet. Je nach Assistenzfunktion beinhaltet das Zielkriterium für die Fahrzeugreaktionsdaten und/oder Umfelddaten, dass Datenwerte, Datendurchschnittswerte, aus den Daten abgeleitete physikalische Größen oder Werte und/oder gefilterter Daten maximiert oder minimiert werden und/oder in einem vorbestimmten Bereich liegen. Entsprechend der Erfüllung des Zielkriteriums ordnet das Bewertungsmodul dem Assistenzsteuersignal, das die zu der Reaktionszeit erfassten Fahrzeugreaktionsdaten und/oder Umfelddaten beeinflusst hat, eine Erfolgswert zu.

In einer bevorzugten Ausführung ist das Steuergerät dazu eingerichtet und bestimmt, die Umfelddaten und die Fahrzeugreaktionsdaten aus dem Speicher zu löschen, wenn der Erfolgswert gleich oder größer dem Erfolgsschwellwert ist.

Insbesondere ist das Bewertungsmodul dazu eingerichtet und bestimmt, den Erfolgswert durch ein eindeutiges Identifikationsmerkmal, wie eine fortlaufende Nummer, den zu der Erfassungszeit abgespeicherten Umfelddaten und/oder den zu der Fahrzeugreaktionszeit abgespeicherten Fahrzeugreaktionsdaten im Speicher zuzuordnen.

In einer bevorzugten Ausführung umfasst das Fahrerassistenzsystem ein Optimierungsmodul, das dazu eingerichtet und bestimmt ist, den Assistenzsystemparameter basierend auf einem oder mehreren von Erfolgswert, Referenzinformation, Fahrzeugreaktionsdaten, Umfelddaten, absoluten Positionsdaten und Zeitdaten abzuändern. Insbesondere fragt das Optimierungsmodul, ausgelöst durch das Bewertungsmodul, wenigstens einen Assistenzsystemparameter aus einem Speicher ab. Insbesondere ermittelt das Optimierungsmodul einen optimierten Assistenzsystemparameter, sobald das Bewertungsmodul mindestens 3, 5 oder 10 mal eine Optimierung des wenigstens einen Assistenzsystemparameters, unter an der gleichen absoluten Position, ausgelöst hat. Vorzugsweise nutzt das Optimierungsmodul ein Maschinenlernverfahren, wie ein Neuronales Netz, um den wenigstens einen Assistenzsystemparameter basierend auf in dem Speicher, insbesondere für die gleiche absolute Position, vorhandenen Umfelddaten und/oder Fahrzeugreaktionsdaten und/oder Erfolgswerten, zu optimieren.

In einer bevorzugten Ausführung ist das Optimierungsmodul dazu eingerichtet und bestimmt, den Assistenzsystemparameter orts- und/oder zeitspezifisch abzuändern. Dazu speichert das Optimierungsmodul einen Zuordnung von für bestimmte absolute Positionen optimierten Assistenzsystemparametern. Die Zuordnung kann auch eine Zeitdimension aufweisen, so dass der Assistenzsystemparameter dem Fahrerassistenzsystem sowohl orts- als auch zeitabhängig vorgegeben wird.

Die hier mit Bezug auf das Fahrerassistenzsystem beschriebenen Aspekte treffen gleichermaßen für das offenbarte Verfahren zu, das beispielsweise von dem Steuergerät ausgeführt werden kann. Dies kann unter Vornahme geeigneter Schreib- und Lesezugriffe auf einen dem Kraftfahrzeug zugeordneten Speicher erfolgen. Das Verfahren ist insbesondere innerhalb des Kraftfahrzeugs in Hardware oder Software oder auch einer Kombination aus Hardware und Software implementiert. Die Hardware umfasst insbesondere digitale Signalprozessoren, anwendungs-spezifische integrierte Schaltkreise, Field Programmable Gate Arrays sowie weitere geeignete Schalt- und Rechenkomponenten. Insbesondere arbeitet das erfindungsgemäße Fahrerassistenzsystem gemäß dem erfindungsgemäßen Verfahren.

Weitere Merkmale, Vorteile und Eigenschaften der Erfindung werden anhand der Beschreibung bevorzugter Ausführungen der Erfindung unter Verweis auf die Figuren erklärt, die zeigen:
- Fig. 1:: eine schematische Darstellung eines Ausführungsbeispiels eines erfindungsgemäßen Fahrerassistenzsystems
- Fig. 2:: eine schematische Darstellung des Datenflusses zu dem und von dem Bewertungsmodul gemäß einem erfindungsgemäßen Ausführungsbeispiel.

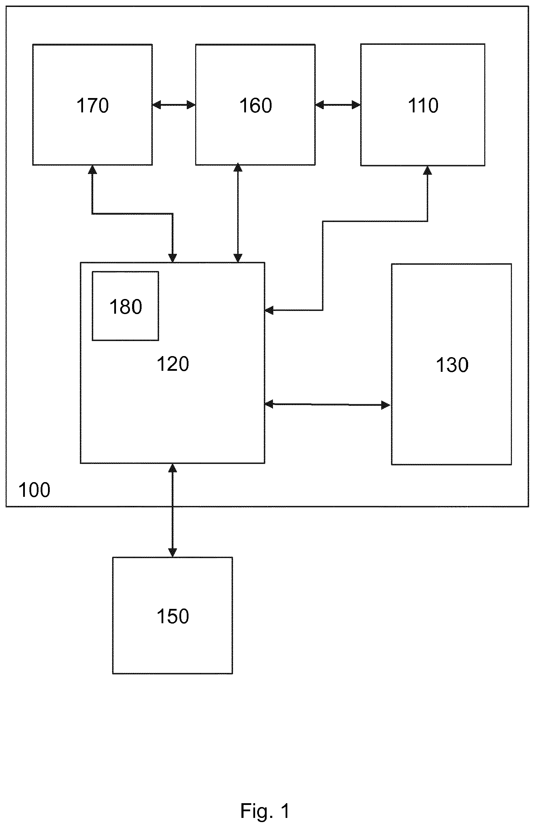

Ein erfindungsgemäßes Fahrerassistenzsystem 100, wie in Fig. 1 gezeigt, umfasst ein Steuergerät 120, das mit einer Umfeldsensorik 110 verbunden ist. Das Fahrerassistenzsystem 100 ist in einem eigenen, das heißt mit dem Fahrerassistenzsystem ausgestatteten, Fahrzeug verbaut und führt eine oder mehrere Assistenzfunktionen aus, die einen Fahrer des eigenen Fahrzeugs teilweise oder vollständig von der Aufgabe, das Fahrzeug zu führen, entlasten.

Die Umfeldsensorik 110 umfasst insbesondere eine Videokamera oder mehrere fahrzeugintegrierte Videokameras, Infrarotkameras, Radar-, Lidar-, Ultraschallsensoren und/oder satellitengestützte absolute Positionssensoren. Die Umfelddaten, die mit der Umfeldsensorik 110 gewonnen werden, sind insbesondere Objekte, Objektpositionen, Objektgeschwindigkeiten in mehreren Raumrichtungen, Objektkanten, Objektbilder, Objektabstand und daraus ermittelbare Relativdaten zwischen dem eigenen Fahrzeug und einem jeweiligen Objekt. Als Objekt sind sowohl statische verkehrsrelevante Bestandteile des Straßenverkehrs, wie Fahrbahnmarkierungen, Verkehrsschilder oder die Fahrbahnoberfläche, als auch bewegliche gemeint, wie Personen oder Fahrzeuge. Das Steuergerät 120 empfängt von der Umfeldsensorik 110 Umfelddaten, welche die Umgebung des Kraftfahrzeugs in einer für das Fahrzeugassistenzsystem verarbeitbaren Form repräsentieren.

Das Steuergerät 120 ist mit einer Benutzerschnittstelle 130 verbunden. Die Benutzerschnittstelle 130 kann ein berührungsempfindlicher Bildschirm und sein oder durch ein System mit einem oder mehreren Ein- und/oder Ausgabegeräten realisiert sein, wie berührungsempfindlichen Bedienelementen, Tasten, Bildschirmen, Licht- oder Bildprojektionsmodulen, Lautsprechern oder Haptikaktoren.

Das Steuergerät 120 erzeugt Assistenzfunktionssteuersignale, die an eine Fahrzeugaktorik 150, wie ein adaptives Fahrwerk, ausgegeben werden, welche die Assistenzfunktion des Fahrerassistenzsystems 100 umsetzt. Sieht die Assistenzfunktion vor, dass mittels des Assistenzfunktionssteuersignals ein Hinweis an den Fahrer ausgelöst wird, wird das Assistenzfunktionssteuersignal an die Benutzerschnittstelle 130 gesandt, welche Assistenzinformationen dem Nutzer des Fahrerassistenzsystems 100 bereitgestellt.

Das Steuergerät 120 empfängt Fahrzeugreaktionsdaten von einem Fahrdynamiksensor 170. Die Fahrzeugreaktionsdaten umfassen Informationen über den momentane Fahrzeugzustand bzw. -bewegung, wie Eigengeschwindigkeit, Beschleunigungen in verschiedenen Raumrichtungen, Raddrehzahlen, Radschlupfdaten und/oder Lenkwinkel.

Ein Bewertungsmodul 160 ist mit dem Steuergerät 120, dem Fahrdynamiksensor 170, der Umfeldsensorik 110 verbunden. Über die Verbindung zum Steuergerät 120 ist das Bewertungsmodul für eine Datenübertragung mit der Benutzerschnittstelle und einem Speicher 180 des Fahrerassistenzsystems verbindbar.

Im einfachsten Fall wertet das Steuergerät 120 Umfelddaten der Umfeldsensorik 110 gemäß einem vorbestimmten Programmcode, der in seiner Gesamtheit einen Funktionszusammenhang der jeweiligen Assistenzfunktion umfasst, aus. Der Funktionszusammenhang enthält mehrere Assistenzsystemparameter, die bei Auslieferung des Fahrerassistenzsystems 100 mit einem, bei der Entwicklung des System ermittelten, Standardwert vorbelegt sind (Standard-Assistenzsystemparameter). Das Ergebnis der Auswertung ist ein Assistenzsteuersignal, welches das Steuergerät 120, z.B. an eine Fahrzeugaktorik 150 sendet, um eine Notbremsung einzuleiten. Alternativ oder zusätzlich sendet das Steuergerät, abhängig von der Assistenzfunktion, das Assistenzsteuersignal an die Benutzerschnittstelle 130.

Auf Grund des Assistenzfunktionssteuersignals kommt es zu einer Reaktion des Fahrzeugs, sein es einer Bremsung oder der Ausgabe einer Warnsignals über die Benutzerschnittstelle 130. Das Bewertungsmodul 160 empfängt während der Reaktion des Fahrzeugs, d.h. zu einem Reaktionszeit, Fahrzeugreaktionsdaten und/oder Umfelddaten betreffend die durch das Assistenzfunktionssteuersignal ausgelöste Fahrzeugreaktion über das Steuergerät 120 oder direkt von dem Fahrdynamiksensor 170 oder der Umfeldsensorik 110. Bezüglich der Benutzerschnittstelle 130 kann eine Bestätigung über die erfolgreiche Ausgabe eines Hinweises an dem Bewertungsmodul 160 empfangen werden. Das Bewertungsmodul 160 setzt die die Fahrzeugreaktion repräsentierenden Fahrzeugreaktionsdaten und/oder Umfelddaten in Bezug zu einer für die Assistenzfunktion spezifischen Referenzinformation und ermittelt, wie nahe die vom Assistenzsteuersignal hervorgerufene Fahrzeugreaktion dem durch die Referenzinformation repräsentierten Sollzustand kommt. Diese Bewertung resultiert in einem vom Bewertungsmodul 160 ermittelten Erfolgswert.

Für den Erfolgswert ist dem Bewertungsmodul 160 ein Schwellwert vorgegeben, bei dessen Unterschreitung, das Bewertungsmodul eine Optimierung der Assistenzfunktion auslöst. Die Optimierung erfolgt durch Anpassung des wenigstens einen Assistenzsystemparameters.

Die Optimierung des Assistenzsystemparameters übernimmt ein Optimierungsmodul, welches in dem Steuergerät 120 implementiert sein kann. Das Optimierungsmodul arbeitet mit bekannten Optimierungsverfahren, Maschinenlernverfahren oder nach einer vorbestimmten Optimierungsregel für einen oder mehrere Assistenzsystemparameter.

Gemäß einem zweiten Ausführungsbeispiel, ist das Fahrerassistenzsystem 100 als automatisiertes Fahrwerkanpassungssystem ausgestaltet. Sofern im Nachfolgenden nicht explizit anders oder im Widerspruch zur vorangehenden Beschreibung dargestellt, arbeitet dieses Ausführungsbeispiel identisch zu dem vorangehend beschriebenen Ausführungsbeispiel.

Die Umfeldsensorik 110 des automatisierten Fahrwerkanpassungssystems umfasst zumindest eine Kamera und einen satellitengestützten absoluten Positionssensor. Die Kamera stellt Bilddaten für das Fahrwerkanpassungssystem bereit. Ein Steuergerät 120 des Fahrwerkanpassungssystems wertet die Bilddaten der Kamera hinsichtlich vorausliegender Fahrbahnunebenheiten aus und passt automatisiert das Fahrwerk für verbesserten Fahrkomfort an. Mithilfe eines optischen Modells ermittelt das Steuergerät 120 aus den Bilddaten Fahrbahnunebenheiten und deren Position bezüglich des Fahrzeugs. Das Steuergerät 120 bestimmt außerdem die Position des eigenen Fahrzeugs, beispielsweise mit dem absoluten Positionssensor, z.B. einem GPS-Modul, und/oder Odometrie. Erreicht das eigene Fahrzeug die Position, an welcher die Unebenheit erfasst wurde, gibt das Steuergerät 120 ein Assistenzfunktionssteuersignal an einen Fahrwerkregler aus, um das Fahrzeug mit möglichst geringer Wankbewegung über die Unebenheit zu bewegen. Eine manuelle Anpassung des Fahrwerks durch den Fahrer entfällt. Das automatisierte Fahrwerkanpassungssystem umfasst mehrere Assistenzsystemparameter, wie Verstärkungsfaktoren, Zeitkonstanten und Schwellwerte für einen aus Erkennungsalgorithmen, Regelalgorithmen und Logikkomponenten gebildetem Assistenzfunktionszusammenhang zwischen den Umfelddaten und dem Assistenzsteuersignal oder, anders ausgedrückt, zwischen erfasster Unebenheit und Anpassung des Fahrwerks. Der Funktionszusammenhang des automatisierten Fahrwerkanpassungssystems kann ein Fahrdynamikmodell umfassen, aus dem Fahrzeugbewegungen auf Grund von Fahrdynamikdaten ermittelt können. Das Fahrdynamikmodell beinhaltet Annahmen über konstante Modellparameter, wie Fahrzeug- und/oder Umweltparameter. Einer oder mehrere Modellparameter, die in einem physikalischen Zusammenhang mit messbaren Fahrzeugreaktionsdaten stehen, sind als gemäß der Erfindung optimierbare Assistenzsystemparameter ausgelegt.

Auf dem Steuergerät 120 oder in einem weiteren Steuergerät des Fahrwerkanpassungssystems ist das Bewertungsmodul 160 implementiert, das eine Referenzinformation durch Abfrage von Fahrzeugreaktionsdaten, wie Daten eines Fahrdynamiksensors 170, z.B. Beschleunigungen in x-, y-, und z-Richtung, Raddrehzahlen oder Radschlupf, erfasst. Das Bewertungsmodul 160 ermittelt anhand einer vorgegebenen Bewertungsregel aus den Fahrzeugreaktionsdaten, einen Erfolgswert für die automatisierte Fahrwerkanpassung, das heißt, einen Indikator dafür, wie gut die Unebenheit ausgeglichen wurde. Die Bewertungsregel umfasst z.B. die Prüfung, ob vorbestimmte maximale Beschleunigungs- und/oder Positionsverschiebungswerte überschritten wurden. In der Bewertungsregel sind Zielkriterien der Assistenzfunktion abgebildet, z.B. im Fall des automatisierten Fahrwerkanpassungssystems die Vermeidung starker Schwankbewegungen, gemessen in Verschiebung des Fahrzeugs in einer oder mehreren Richtungen. Das Resultat der Anwendung der Bewertungsregel auf die Fahrzeugreaktionsdaten ist ein Erfolgswert, der anzeigt, wie gut die Assistenzfunktion in der jeweiligen Assistenzsituation gearbeitet hat, hier wie gut die Fahrbahnunebenheit ausgeglichen wurde.

Alternativ oder zusätzlich gibt das Bewertungsmodul 160 über die Benutzerschnittstelle 130 eine Abfrage an den Nutzer des Assistenzsystems aus, in der dieser bewerten kann, ob er mit der Assistenzfunktionalität in der momentanen Situation zufrieden war. Wird eine Benutzerabfrage durch den Benutzer über die Benutzerschnittstelle 130 nicht beantwortet, kommt die zuvor beschriebene automatisierte Ermittlung des Erfolgswerts anhand der Fahrzeugreaktionsdaten zum Einsatz. Wird die Abfrage über die Benutzerschnittstelle 130 zusätzlich durchgeführt, kombiniert die Bewertungsregel die Bewertung der Fahrzeugreaktionsdaten mit der über die Benutzerschnittstelle 130 empfangenen Bewertung in Form einer Benutzereingabe.

Nach Ermittlung des vom Nutzer über die Benutzerschnittstelle 130 zurückgemeldeten, des automatisiert, durch Bewertung der Fahrzeugreaktionsdaten, ermittelten, oder des kombiniert ermittelten Erfolgswerts, veranlasst das Bewertungsmodul 160 das Steuergerät 120 die für die bewertete Situation zur Erfassungszeit erfassten Umfelddaten, die zur Reaktionszeit erfassten Umfelddaten und/oder Fahrzeugreaktionsdaten, die jeweilige absolute Fahrzeugposition und Zeit für die jeweiligen Daten und den ermittelten Erfolgswert aus einem Zwischenspeicher in einen Langzeitspeicher zu verschieben. Zwischenspeicher und Langzeitspeicher können als Teilbereiche des Speichers 180 logisch von dem Steuergerät 120 organisiert sein. Der Inhalt des Langzeitspeichers bleibt beim Abschalten des Fahrzeugs erhalten und wird auf einen Löschbefehl des Steuergeräts 120 hin freigegeben.

Das Steuergerät 120 prüft bei jedem neuen Eintrag oder zyklisch nach einer vorbestimmten Anzahl von Einträgen in den Langzeitspeicher, ob mehrere Einträge für denselben Ort im Langzeitspeicher vorhanden sind. Alternativ oder zusätzlich prüft das Steuergerät 120 bei jedem neuen Eintrag oder zyklisch auf Korrelationen in den gespeicherten Daten unabhängig vom Ort des Eintrags, wie eine Häufung von Schwellwertüberschreitungen für Fahrzeugreaktionsdaten.

Das Steuergerät 120 prüft, ob eine Optimierungsbedingung vorliegt, wie das Vorliegen mehrerer Einträge an selben Ort oder wenigstens 5-faches Auftreten von schlechter Erfolgswert bei hohem z-Positionsversatz, und leitet, sofern die Optimierungsbedingung erfüllt ist, eine Optimierung eines Assistenzsystemparameters ein. Das automatisierte Fahrwerkanpassungssystem kann so ausgelegt sein, dass genau ein Assistenzsystemparameter, wie ein Verstärkungsfaktor eines Regelalgorithmus, angepasst wird. Insbesondere ermittelt das Steuergerät 120, aus den Fahrzeugreaktionsdaten, welcher von mehreren Assistenzsystemparametern optimiert werden soll. Dazu kann das Steuergerät 120 eine vorbestimmte Zuordnung und eine Optimierungsregel aufweisen. Beispielsweise kann Fahrzeugreaktionsdaten, die eine Beschleunigung in z-Richtung repräsentieren, ein Verstärkungsfaktor für einen Dämpfungsregelalgorithmus in z-Richtung als Assistenzsystemparameter zugeordnet sein. Beispielsweise kann als Regel implementiert sein, dass der Verstärkungsfaktor für eine Dämpfungsregelung in einer jeweiligen Richtung bei hohem Positionsversatz in der jeweiligen Richtung um einen vorbestimmten Wert angehoben wird. Alternativ erfolgt die Ermittlung des zu optimierenden Assistenzsystemparameter durch ein neuronales Netz, das auf dem Steuergerät 120 implementiert. Je nach gewählter Optimierungsregel oder gewähltem Maschinenlernverfahren, können alle im Langzeitspeicher vorhandenen Daten verarbeitet werden. Bei erfolgreicher Optimierung ersetzt das Optimierungsmodul den wenigstens einen Assistenzsystemparameter im Funktionszusammenhang durch den wenigstens einen optimierten Assistenzsystemparameter.

In einer Variante des Ausführungsbeispiels wird der Assistenzsystemparameter zeitlich und/oder lokal begrenzt angepasst. Es wird also für einen bestimmten Ort, an dem mehrfach der Erfolgsschwellwert unterschritten wurde, ein Assistenzsystemparameter für diesen Ort angepasst werden. Alternativ oder zusätzlich kann eine tageszeit- und/oder jahreszeitspezifische Anpassung des Assistenzsystemparameters vorgenommen werden. Beispielsweise kann dies bei systematischen Erfassungsfehlern der Kamera auf Grund von bestimmten zeit- und/oder ortsspezifischen Lichtverhältnissen sinnvoll sein. Potentielle anpassbare Assistenzsystemparameter sind mit Lichtverhältnissen im Zusammenhang stehende Parameter in den Bildverarbeitungsalgorithmen, welche aus den Umfelddaten Fahrbahnunebenheiten extrahieren. Die orts- und/oder zeitspezifischen angepassten Werte für den Assistenzsystemparameter werden in einer Zuordnungstabelle abgelegt. Das Steuergerät 120 priorisiert die Assistenzsystemparameter aus der Zuordnungstabelle gegenüber einem Standard-Assistenzsystemparameter, sofern sich das Fahrzeug an der gleichen absoluten Position befindet. Unter Standard-Assistenzsystemparameter ist zu verstehen, dass dieser lokal und zeitlich unbegrenzt gültig ist, zumindest bis dieser gegebenenfalls durch das Optimierungsmodul abgeändert wird.

Alternativ oder zusätzlich zu einer zeitlich und/oder lokal begrenzten Anpassung wird der als Standard-Assistenzsystemparameter durch das Optimierungsmodul abgeändert. Dies hat den Effekt einer Veränderung des gesamten Systemverhaltens. Das Steuergerät 120 kann mehrere Optimierungsbedingungen umfassen und dazu eingerichtet sein, bei Vorliegen einer ersten Optimierungsbedingung eine zeitlich und lokal begrenzte Änderung des Assistenzsystemparameters zu initialisieren und bei Vorliegen einer zweiten Optimierungsbedingung eine Optimierung des/der Standard-Assistenzsystemparameter(s).

Gemäß einem weiteren Ausführungsbeispiel ist das Fahrerassistenzsystem als Notbremsassistent ausgestaltet. Sofern im Nachfolgenden nicht explizit anders oder im Widerspruch zur vorangehenden Beschreibung dargestellt, arbeitet dieses Ausführungsbeispiel identisch zu den vorangehend beschriebenen Ausführungsbeispielen. Die Umfeldsensorik 110 umfasst für einen Notbremsassistenten zumindest einen Abstandssensor, der als Umfelddaten Abstandsdaten zu einem im Umfeld des eigenen Fahrzeugs erfassten Objekt und dem eigenen Fahrzeug bereitstellt. Der Notbremsassistent ermittelt aus den Abstandsdaten und der Geschwindigkeit des eigenen Fahrzeugs, ob eine Kollision droht. Ob und wann eine Notbremsung durch das Notbremssystem ausgelöst wird, bestimmt ein Steuergerät 120 des Notbremssystem anhand vordefinierter Kriterien, wie dem Abstand zwischen Objekt und eigenem Fahrzeug, Relativgeschwindigkeit und Verzögerungsvermögen des eigenen Fahrzeugs. Bei der Bestimmung des Assistenzfunktionssteuersignals, welches die Notbremsung auslöst, verarbeitet das Steuergerät 120 des Notbremsassistenten einen Funktionszusammenhang zwischen Relativgeschwindigkeit, Abstand und Verzögerungsvermögen. Das Verzögerungsvermögen kann als Assistenzsystemparameter im Notbremsassistent hinterlegt sein oder durch ein Modell abgebildet sein, das Assistenzsystemparameter, wie einen vordefinierten Reibungskoeffizienten zwischen Straße und Rad des eigenen Fahrzeugs oder einen Verschleißzustand des Bremssystems, umfasst. Der Assistenzsystemparameter ist im Auslieferungszustand des eigenen Fahrzeugs mit einem Standard-Assistenzsystemparameter vorbelegt, der während der Entwicklung des Notbremsassistenten bestimmt wurde.

Ein Bewertungsmodul 160 des Notbremsassistenten, das in dem Steuergerät 120 implementiert oder als separates Elektronikmodul oder Steuergerät ausgeführt sein kann, erfasst das Bremsverhalten bei einer Notbremsung. Als Fahrzeugreaktionsdaten werden beispielsweise Verzögerungen in X- und Y-Richtung, ein Radschlupf und/oder ein Abstandsverlauf relativ zudem Objekt erfasst. Für die Ermittlung des Erfolgswerts vergleicht das Bewertungsmodul 160 gemessene oder gemittelte Fahrzeugreaktionsdaten mit einem entsprechenden Standard-Assistenzsystemparameter, z.B. Verzögerung in X-Richtung, oder nutzt eine Bewertungsregel, die weitere Einflussfaktoren berücksichtigt. Beispielsweise kombiniert die Bewertungsregel eine Abweichung des mit dem Notbremsmanöver erreichten Abstands zum Objekt von einem erwarteten Abstand zum Objekt und eine Abweichung der erreichten Verzögerung von einer erwarteten Verzögerung. Unterschreitet der Erfolgswert des Notbremsassistenten einer Erfolgsschwellwert, wird wenigstens ein Assistenzsystemparameter mit dem Optimierungsmodul auf Basis der Fahrzeugreaktionsdaten und/oder der Umfelddaten optimiert.

Das Bewertungsmodul 160 kann zudem überwachen, ob das Assistenzsteuersignals des Notbremsassistenten durch das Steuergerät 120 widerrufen wird, z.B. weil sich aufgrund veränderter Umfelddaten aus dem Funktionszusammenhang ergibt, dass das Assistenzfunktionssteuersignal nicht weiter gültig ist. Ursächlich dafür kann eine zeitweise Fehlerkennung eines Objekts und/oder fehlerhafte Ermittlung von das Objekt betreffenden Umfelddaten sein. Ein Widerruf des Assistenzsteuersignals kann durch das Bewertungsmodul 160 basierend auf Fahrzeugreaktionsdaten, z.B. aus einem abgebrochenen Bremsvorgang oder Statusinformationen des Steuergeräts 120, erfasst werden und mit einem Erfolgswert unter dem Erfolgsschwellwert belegt werden. Somit werden Situationen, in denen der Notbremsassistent fehlerhaft arbeitet, erkannt und zur Optimierung eines oder mehrerer Assistenzsystemparameter(s) genutzt. Dabei verarbeitet das Optimierungsmodul insbesondere die zum Zeitpunkt der fehlerhaften Erkennung erfassten Umfelddaten.

Gemäß einem weiteren Ausführungsbeispiel ist das Fahrerassistenzsystem als Verkehrszeichenerkennungssystem ausgestaltet. Sofern im Nachfolgenden nicht explizit anders oder widersprüchlich zur vorangehenden Beschreibung dargestellt, arbeitet dieses Ausführungsbeispiel identisch zu den vorangehend beschriebenen Ausführungsbeispielen. Die Umfeldsensorik 110 umfasst für das Verkehrszeichenerkennungssystem zumindest eine Kamera, die aus Bilddaten mittels bekannter Verfahren Verkehrszeichen ermittelt, und einen Absolutpositionssensor, wie ein GPS-Modul, der Positionsdaten für das eigenen Fahrzeugs bereitstellt. Das Verkehrszeichenerkennungssystem kann auch die Position der Verkehrszeichen relativ zum Fahrzeug ermitteln.

Aufgrund zeitweiser Verdeckung von Verkehrszeichen, z.B. durch andere Verkehrsteilnehmer oder Pflanzenwuchs, kann es zu Schlecht - oder Nichterkennung von Verkehrszeichen durch eine Kamera kommen. Die Verkehrszeichenerkennung nutzt bekannte Bildverarbeitungsverfahren, um aus den Umfelddaten Verkehrszeichen zu extrahieren. Die Bildverarbeitungsverfahren und eine darüber hinausgehende Anzeigelogik, welche das Steuergerät 120 des Verkehrszeichenerkennungssystems zur Erzeugung eines Assistenzfunktionssteuersignals und einer Ausgabe eines Assistenzhinweises über eine Benutzerschnittstelle 130 nutzt, umfassen wenigstens einen Assistenzsystemparameter. Der Assistenzsystemparameter ist beispielsweise ein Parameter im Bildverarbeitungsverfahren und/oder ein Schwellwert, in Abhängigkeit von dem ein Assistenzfunktionssteuersignal zur Ausgabe oder Nichtausgabe eines des Verkehrszeichens. Infolge des Assistenzfunktionssteuersignals erfolgt als Fahrzeugreaktion eine Ausgabe oder Nichtausgabe, insbesondere Anzeige oder Nichtanzeige, eines erkannten bzw. nicht erkannten Verkehrszeichens oder eine Fehlermeldung.

Das Bewertungsmodul 160 greift für eine Referenzinformation auf einen Umfelddaten in dem Speicher 180, insbesondere einem Langzeitspeicher zu, in dem bekannte Verkehrszeichen absoluten Positionen zugeordnet sind, wie zu einem früheren Zeitpunkt erkannte und abgespeicherte Verkehrszeichen.

Zur Ermittlung des Erfolgswerts vergleicht das Bewertungsmodul 160 das eine Anzeige oder Nichtanzeige oder Fehlanzeige repräsentierende Assistenzsteuersignal mit der vom Speicher 180 bereitgestellten Referenzinformation. Alternativ oder zusätzlich kann zur Ermittlung des Erfolgswerts eine Abfrage über die Benutzerschnittstelle 130 angesteuert werden. Alternativ oder zusätzlich umfasst die Ermittlung des Erfolgswerts die Erfassung von Fahrzeugreaktionsdaten, wie Beschleunigungsdaten eines Fahrdynamiksensors. Mit letztgenannter Maßnahme kann das Verhalten des Fahrers des eigenen Fahrzeugs infolge des Assistenzsteuersignals einbezogen werden. Bewirkt das Assistenzfunktionssteuersignal die Anzeige eines Tempolimits, dass unterhalb der momentanen Geschwindigkeit des eigenen Fahrzeugs liegt, ohne dass der Fahrer des eigenen Fahrzeugs, z.B. mit einem Bremsvorgang auf das Assistenzfunktionssteuersignals reagiert, kann dies als Indikator für eine Fehlerkennung des Verkehrszeichenerkennungssystems in die Ermittlung des Erfolgswerts einbezogen werden.

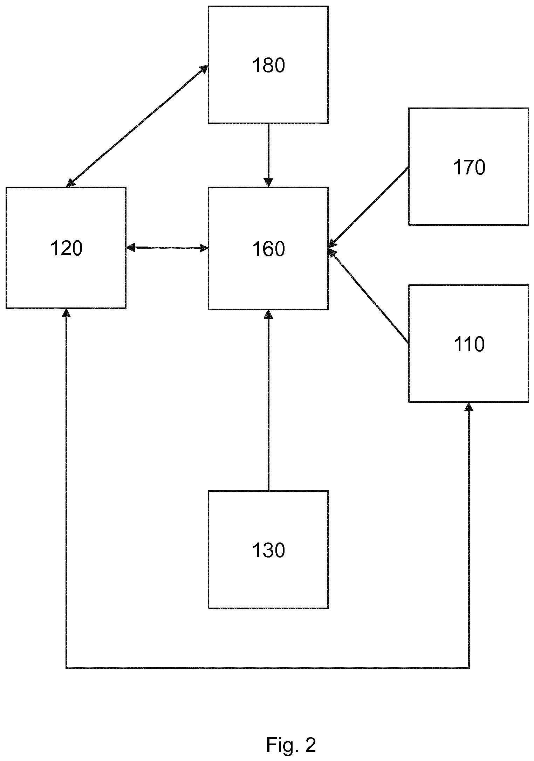

In Figur 2 ist schematisch dargestellt, wie das Bewertungsmodul 160 den Erfolgswert durch Vergleich mit einer Referenzinformation ermittelt. Das Bewertungsmodul 160 empfängt ein Assistenzfunktionssteuersignal vom Steuergerät 120 und ermittelt eine Referenzinformation. Wie zuvor für das automatisierte Fahrwerkanpassungssystem beschrieben kann das Ermitteln der Referenzinformation umfassen, dass Fahrzeugreaktionsdaten eines Fahrdynamiksensors 170 verarbeitet werden. Das Bewertungsmodul 160 umfasst für die Fahrzeugreaktionsdaten eine Bewertungsregel unter Berücksichtigung eines Zielkriteriums als Referenzinformation, wie Minimierung der Beschleunigungen in Z-Richtung. Die Fahrzeugreaktionsdaten werden bezüglich der Referenzinformation, insbesondere mit einer vorgegebenen Bewertungsregel, bewertet.

Alternativ oder zusätzlich umfasst das Ermitteln der Referenzinformation einen Vergleich der dem Assistenzsteuersignal zu Grunde liegenden Umfelddaten mit Umfelddaten, die für die gleiche absolute Position in dem Speicher 180 hinterlegt sind. Abweichungen zur vorgegebenen Referenzinformation führen zu einer Abwertung hinsichtlich des Erfolgswerts, Übereinstimmungen oder Erreichen eines Zielkriteriums führen zu einer Erhöhung des Erfolgswerts. Umfasst das Ermitteln der Referenzinformation mehrere der vorgenannten Alternativen, können die jeweiligen Einzelwertungen zueinander gewichtet berücksichtigt werden.

Alternativ oder zusätzlich kann eine Fahrer gesteuerte Bewertung des Assistenzsteuersignals über die Benutzerschnittstelle 130 über das Bewertungsmodul 160 angesteuert und bei der Ermittlung des Erfolgswerts berücksichtigt werden.

In einer besonderen Ausführungsform, die im Übrigen dem Ausführungsbeispiels der Fig. 1 entspricht, sind alle Komponenten des Fahrerassistenzsystems 100 in einem gemeinsamen Gehäuse einer Kamera, zusammen mit einer Linse und einem Bildgebungssensor der Kamera integriert.

### Bezugszeichen

- 100: Fahrerassistenzsystem
- 110: Umfeldsensorik
- 120: Steuergerät
- 130: Benutzerschnittstelle
- 150: Fahrzeugaktorik
- 160: Bewertungsmodul
- 170: Fahrdynamiksensor
- 180: Speicher

## Patentansprüche

1. Fahrerassistenzsystem für ein Kraftfahrzeug, umfassend eine Umfeldsensorik ein Steuergerät und ein Bewertungsmodul, wobei das Steuergerät dazu eingerichtet und bestimmt ist, basierend auf von der Umfeldsensorik erfassten Umfelddaten ein Assistenzfunktionssteuersignal zu ermitteln, das in einem vorbestimmten Funktionszusammenhang mit wenigstens einem Assistenzsystemparameter und den erfassten Umfelddaten steht, und das Fahrzeug zur Bereitstellung einer Assistenzfunktion mit dem Assistenzfunktionssteuersignal anzusteuern, und **dadurch gekennzeichnet, dass** das Bewertungsmodul dazu eingerichtet und bestimmt ist, einen Erfolgswert für das Assistenzfunktionssteuersignal anhand einer Referenzinformation zu ermitteln und, falls der Erfolgswert einen Erfolgsschwellwert unterschreitet, eine Optimierung des wenigstens einen Assistenzsystemparameters auszulösen, und dass das Fahrerassistenzsystem einen Absolutpositionssensor und einen Speicher umfasst, der absoluten Fahrzeugpositionen zugeordnete Umfelddaten und/oder Fahrzeugreaktionsdaten aufweist, und dass das Bewertungsmodul dazu eingerichtet und bestimmt ist, die Referenzinformation aus Umfelddaten und/oder Fahrzeugreaktionsdaten des Speichers für eine mit dem Absolutpositionssensor gemessene momentane Fahrzeugposition zu bilden.

2. Fahrerassistenzsystem nach Anspruch 1, wobei das Bewertungsmodul mit einem Fahrdynamiksensor und/oder einer Umfeldsensorik verbindbar und dazu eingerichtet und bestimmt ist, die Referenzinformation aus mit dem Fahrdynamiksensor erfassten Fahrzeugreaktionsdaten und/oder mit der Umfeldsensorik erfassten Umfelddaten zu ermitteln.

3. Fahrerassistenzsystem nach einem der vorstehenden Ansprüche, wobei das Steuergerät dazu eingerichtet und bestimmt ist, Umfelddaten zu einer Erfassungszeit zu erfassen sowie Fahrzeugreaktionsdaten und/oder Umfelddaten zu einer Referenzinformationszeit zu erfassen.

4. Fahrerassistenzsystem nach einem der vorstehenden Ansprüche, ferner umfassend eine Benutzerschnittstelle, wobei das Bewertungsmodul dazu eingerichtet und bestimmt ist, zur Ermittlung des Erfolgswert die Benutzerschnittstelle zur Ausgabe einer Benutzerabfrage und Empfang einer Benutzereingabe anzusteuern.

5. Fahrerassistenzsystem nach einem der vorstehenden Ansprüche, wobei das Bewertungsmodul dazu eingerichtet und bestimmt ist für die Ermittlung des Erfolgswerts, gemäß einer vordefinierten Abfolge dem Speicher vorhandene Umfelddaten und/oder Fahrzeugreaktionsdaten für eine mit dem Absolutpositionssensor gemessene momentane Fahrzeugposition mit den erfassten Umfelddaten und/oder Fahrzeugreaktionsdaten zu vergleichen, Fahrzeugreaktionsdaten bezüglich wenigstens eines Zielkriteriums zu bewerten und/oder eine Benutzerschnittstelle zur Ausgabe einer Benutzerabfrage und Empfang einer Benutzereingabe anzusteuern.

6. Fahrerassistenzsystem nach einem der vorstehenden Ansprüche, das ein Optimierungsmodul umfasst, das dazu eingerichtet und bestimmt ist, den Assistenzsystemparameter basierend auf einem oder mehreren von Erfolgswert, Referenzinformation, Fahrzeugreaktionsdaten, Umfelddaten, absoluten Positionsdaten und Zeitdaten abzuändern.

7. Fahrerassistenzsystem nach Anspruch 6, wobei das Optimierungsmodul dazu eingerichtet und bestimmt ist, den Assistenzsystemparameter orts- und/oder zeitspezifisch abzuändern.

8. Fahrerassistenzsystem nach einem der vorstehenden Ansprüche, wobei die Umfeldsensorik eine Kamera mit einer Linse und einem Bildgebungssensor umfasst und das Steuergerät in einem gemeinsamen Gehäuse mit der Linse und dem Bildgebungssensor angeordnet ist.

9. Verfahren zum assistierten Betreiben eines Kraftfahrzeugs mit Unterstützung eines Fahrerassistenzsystems umfassend ein Steuergerät und eine Umfeldsensorik, wobei mit der Umfeldsensorik Umfelddaten erfasst werden, ein vorbestimmter Funktionszusammenhang basierend auf den erfassten Umfelddaten und wenigstens einem Assistenzsystemparameter von dem Steuergerät ausgewertet wird, um wenigstens ein Assistenzfunktionssteuersignal zu ermitteln, das Fahrzeug mit dem Assistenzfunktionssteuersignal angesteuert wird, **gekennzeichnet dadurch, dass** eine Referenzinformation betreffend das Assistenzfunktionssteuersignal erfasst wird, ein Erfolgswert für das Assistenzsteuersignal ermittelt und, falls der Erfolgswert einen Erfolgsschwellwert unterschreitet, eine Optimierung des Assistenzsystemparameters ausgelöst wird, wobei die Referenzinformation aus Umfelddaten und/oder Fahrzeugreaktionsdaten gebildet wird, wobei die Umfelddaten und/oder Fahrzeugreaktionsdaten absoluten Fahrzeugpositionen zugeordnet werden.

## Claims

1. Driver assistance system for a motor vehicle, comprising a surroundings sensor system, a controller and an assessment module, wherein the controller is designed and intended to ascertain an assistance function control signal based on surroundings data recorded by the surroundings sensor system, which assistance function control signal has a predetermined functional relationship with at least one assistance system parameter and the recorded surroundings data, and to control the vehicle using the assistance function control signal so as to provide an assistance function, and **characterized in that** the assessment module is designed and intended to ascertain a success value for the assistance function control signal on the basis of reference information and, if the success value falls below a success threshold value, to trigger optimization of the at least one assistance system parameter, and **in that** the driver assistance system comprises an absolute position sensor and a memory that contains surroundings data and/or vehicle response data associated with absolute vehicle positions, and **in that** the assessment module is designed and intended to form the reference information from surroundings data and/or vehicle response data of the memory for a current vehicle position measured using the absolute position sensor.

2. Driver assistance system according to Claim 1, wherein the assessment module is able to be connected to a driving dynamics sensor and/or a surroundings sensor system and is designed and intended to ascertain the reference information from vehicle response data recorded using the driving dynamics sensor and/or surroundings data recorded using the surroundings sensor system.

3. Driver assistance system according to either of the preceding claims, wherein the controller is designed and intended to record surroundings data at a recording time and to record vehicle response data and/or surroundings data at a reference information time.

4. Driver assistance system according to one of the preceding claims, furthermore comprising a user interface, wherein the assessment module is designed and intended, in order to ascertain the success value, to control the user interface so as to output a user query and receive a user input.

5. Driver assistance system according to one of the preceding claims, wherein the assessment module is designed and intended, in order to ascertain the success value, to compare surroundings data and/or vehicle response data present in the memory for a current vehicle position measured using the absolute position sensor with the recorded surroundings data and/or vehicle response data in a predefined order, to assess vehicle response data with regard to at least one target criterion and/or to control a user interface so as to output a user query and receive a user input.

6. Driver assistance system according to one of the preceding claims, comprising an optimization module that is designed and intended to amend the assistance system parameter based on one or more of the success value, reference information, vehicle response data, surroundings data, absolute position data and time data.

7. Driver assistance system according to Claim 6, wherein the optimization module is designed and intended to amend the assistance system parameter in a location-specific and/or time-specific manner.

8. Driver assistance system according to one of the preceding claims, wherein the surroundings sensor system comprises a camera having a lens and an imaging sensor and the controller is arranged in a common housing with the lens and the imaging sensor.

9. Method for the assisted operation of a motor vehicle with the support of a driver assistance system, comprising a controller and a surroundings sensor system, wherein the surroundings sensor system records surroundings data, a predetermined functional relationship is evaluated by the controller based on the recorded surroundings data and at least one assistance system parameter in order to ascertain at least one assistance function control signal, the vehicle is controlled using the assistance function control signal, **characterized in that** reference information relating to the assistance function control signal is recorded, a success value for the assistance control signal is ascertained and, if the success value falls below a success threshold value, optimization of the assistance system parameter is triggered, wherein the reference information is formed from surroundings data and/or vehicle response data, wherein the surroundings data and/or vehicle response data are associated with absolute vehicle positions.

## Revendications

1. Système d'aide à la conduite d'un véhicule automobile, ledit système comprenant un ensemble de capteurs d'environnement, une unité de commande et un module d'évaluation, l'unité de commande étant conçue et définie pour déterminer, sur la base de données d'environnement acquises par l'ensemble de capteurs d'environnement, un signal de commande de fonction d'aide qui est dans une relation fonctionnelle prédéterminée avec au moins un paramètre de système d'aide et les données d'environnement acquises, et commander le véhicule avec le signal de commande de fonction d'aide afin de fournir une fonction d'aide, et **caractérisé en ce que** le module d'évaluation est conçu et défini pour déterminer une valeur de réussite du signal de commande de fonction d'aide sur la base d'une information de référence et, si la valeur de réussite est inférieure à un seuil de réussite, déclencher une optimisation de l'au moins un paramètre de système d'aide, et **en ce que** le système d'aide à la conduite comprend un capteur de position absolue et une mémoire qui comporte des données d'environnement et/ou des données de réaction de véhicule associées à des positions de véhicule absolues, et **en ce que** le module d'évaluation est conçu et défini pour former l'information de référence à partir de données d'environnement et/ou de données de réaction de véhicule de la mémoire pour une position de véhicule instantanée mesurée avec le capteur de position absolue.

2. Système d'aide à la conduite selon la revendication 1, le module d'évaluation pouvant être relié à un capteur de dynamique de conduite et/ou à un ensemble de capteurs d'environnement et étant conçu et défini pour déterminer l'information de référence à partir de données de réaction de véhicule acquises avec le capteur de dynamique de conduite et/ou de données d'environnement acquises avec l'ensemble de capteurs d'environnement.

3. Système d'aide à la conduite selon l'une des revendications précédentes, l'unité de commande étant conçue et définie pour acquérir des données d'environnement à un instant d'acquisition et acquérir des données de réaction de véhicule et/ou des données d'environnement à un instant d'information de référence.

4. Système d'aide à la conduite selon l'une des revendications précédentes, comprenant en outre une interface d'utilisateur, le module d'évaluation étant conçu et défini pour commander l'interface utilisateur afin d'émettre une requête d'utilisateur et recevoir une entrée d'utilisateur dans le but de déterminer la valeur de réussite.

5. Système d'aide à la conduite selon l'une des revendications précédentes, le module d'évaluation étant conçu et défini, afin de déterminer la valeur de réussite, pour comparer selon une séquence prédéfinie les données d'environnement et/ou données de réaction de véhicule, disponibles dans la mémoire et relatives à une position de véhicule instantanée mesurée avec le capteur de position absolue, aux données d'environnement et/ou données de réaction de véhicule acquises, évaluer des données de réaction de véhicule par rapport à au moins un critère cible et/ou commander une interface d'utilisateur pour émettre une requête d'utilisateur et recevoir une entrée d'utilisateur.

6. Système d'aide à la conduite selon l'une des revendications précédentes, qui comprend un module d'optimisation qui est conçu et défini pour modifier le paramètre de système d'aide sur la base d'un ou plusieurs éléments parmi une valeur de réussite, une information de référence, des données de réaction de véhicule, des données d'environnement, des données de position absolues et des données de temps.

7. Système d'aide à la conduite selon la revendication 6, le module d'optimisation étant conçu et défini pour modifier le paramètre de système d'aide d'une manière localement et/ou temporellement spécifique.

8. Système d'aide à la conduite selon l'une des revendications précédentes, l'ensemble de capteurs d'environnement comprenant une caméra dotée d'une lentille et d'un capteur d'imagerie et l'unité de commande étant disposée dans un boîtier commun avec la lentille et le capteur d'imagerie.

9. Procédé d'aide à la conduite d'un véhicule automobile avec l'appui d'un système d'aide à la conduite comprenant une unité de commande et un ensemble de capteurs d'environnement, des données d'environnement étant acquises avec les capteurs d'environnement, une relation fonctionnelle prédéterminée étant évaluée par l'unité de commande sur la base des données d'environnement acquises et d'au moins un paramètre de système d'aide afin de déterminer au moins un signal de commande de fonction d'aide, le véhicule étant commandé avec le signal de commande de fonction d'aide, **caractérisé en ce qu'**une information de référence concernant le signal de commande de fonction d'aide est acquise, une valeur de réussite du signal de commande d'aide est déterminée et, si la valeur de réussite est inférieure à un seuil de réussite, une optimisation du paramètre de système d'aide est déclenchée, l'information de référence étant formée à partir de données d'environnement et/ou de données de réaction de véhicule, les données d'environnement et/ou les données de réaction de véhicule étant associées à des positions de véhicule absolues.
